# EUROPEAN PATENT SPECIFICATION

(11) **EP 4 062 100 B1**
(45) Date of publication and mention of the grant of the patent: **18.09.2024**
(21) Application number: 20842458.0
(22) Date of filing: 17.12.2020
(51) Int. Cl.: F21V 8/00

(54) **POLARIZING EDGE COUPLED LIGHT IN BACKLIGHT**
POLARISIERUNG VON KANTENGEKOPPELTEM LICHT IN HINTERGRUNDBELEUCHTUNG
LUMIÈRE COUPLÉE À UN BORD DE POLARISATION D'APPAREIL DE RÉTROÉCLAIRAGE

(30) Priority: 19.12.2019 US 201916721637
(43) Date of publication of application: 28.09.2022
(73) Proprietor: Lumileds LLC, San Jose, CA 95131 (US)
(72) Inventor: AAS, Mehdi, Endlhoven, 5652 AB (NL); PFEFFER, Nicola, Bettina, Eindhoven, 5653 JS (NL); VAN DER SIJDE, Arjen, Gerben, Eindhoven, 5613 BL (NL); FANCSALI, Erno, Heusden-Zolder, Limburg, 3550 (BE)
(74) Representative: Beckord & Niedlich Patentanwälte PartG mbB
(86) International application number: PCT/US2020/065751
(87) International publication number: WO 2021/127277

(56) References cited:
- US-A1- 2008 247 150
- US-A1- 2008 247 150
- US-A1- 2016 349 518
- US-A1- 2016 349 518
- US-A1- 2019 212 560
- US-A1- 2019 212 560
- US-B1- 6 318 863
- US-B1- 6 318 863

## Description

### PRIORITY APPLICATION

This application claims the benefit of priority to US Patent Application Serial Number 16/721,637, filed 19 December 2019, and entitled, "POLARIZING EDGE COUPLED LIGHT IN BACKLIGHT".

### TECHNICAL FIELD

The present disclosure relates to a display device with improved brightness and display power efficiency. The improved backlight includes a polarization device configured to increase polarization of the light incident on a light guide. The increased polarization provides improved power efficiency and brightness.

### BACKGROUND

Displays, especially three-dimensional (3D) holographic displays, suffer from problems of low brightness and low power efficiency. Publication US 2008/247150 A1 discloses a surface illumination apparatus. The surface illumination apparatus comprises a light source, an end-surface light-guide portion which guides light emitted from the light source in a long-side direction thereof and generates emitted light in a short-side direction thereof, and a light guide plate which allows the emitted light to be incident upon an end-surface portion thereof and emits the incident light from one main-surface portion thereof. The end-surface light-guide portion includes a plurality of polarization control portions arranged in the long-side direction. Each polarization control portion has a half-wave plate and a polarizing prism. The end-surface light-guide portion emits the emitted light in the form of either of S-polarized light and P-polarized light, using the plurality of polarization control portions. The light guide plate emits, as output light, either of S-polarized light and P-polarized light from the one main-surface portion.

Publication US 2016/349518 A1 discloses an optical system. The optical system comprises a substrate and a light source. The s-polarized input light-waves from the light source are coupled into a light-guide through its entrance surface. Following reflection-off of a polarizing beamsplitter, the light-waves are coupled-out of the substrate through an external surface of the light-guide.The light-waves then pass through a quarter-wavelength retardation plate, reflected by a reflecting optical element, e.g., a flat mirror, return to pass again through the retardation plate, and re-enter the light-guide through external surface. The now p-polarized light-waves pass through the polarizing beamsplitter and are coupled out of the light-guide through an external surface of the light-guide. The light-waves then pass through a second quarter-wavelength retardation plate, collimated by a component, e.g., a lens, at its reflecting surface, return to pass again through the retardation plate, and re-enter the light-guide through the external surface. The now s-polarized light-waves reflect-off the polarizing beamsplitter and exit the light-guide through the exit surface.

Publication US 6 318 863 B1 discloses an illumination device comprising a light source including multiple light emitting modules, an array of taper light pipes, a polarization converter, and a taper light pipe. The polarization converter comprises a first polarization beam splitter and a second polarization beam splitter arranged parallel with each other. The first polarization beam splitter is arranged with an angle, for example, 45 degree, with the array of taper light pipes. When the light comes out from the second end of the taper light pipes, a first polarization type (for example, P-type) light transmits through the first polarization beam splitter, while the second polarization type (for example, S-type) light is reflected and incident onto the second polarization beam splitter. Being further reflected by the second polarization beam splitter, the second polarization type light transmits through a half-wave plate to be converted into a first polarization type light. The taper light pipe is disposed in front of the polarization converter to receive the first polarization type light coming out from the polarization converter.

Publication US 2019/212560 A1 discloses a head-up display apparatus including an image display apparatus generating image light to be projected, an optical system performing predetermined correction to the image light emitted from the image display apparatus, and a concave mirror reflecting the image light corrected by the optical system to project it onto a windshield or combiner. The image display apparatus includes a solid light source, a collimating optical system converting, into parallel light, the light from the solid light source, a lighting optical system configured by an optical member that polarizes a direction of a light beam generated by the collimating optical system and simultaneously expands a width of the light beam, and a display apparatus. Embodiments herein provide improved brightness and power efficiency.

### BRIEF DESCRIPTION OF THE DRAWINGS

The figures show various views of an apparatus, including a lens that can shape light emerging from one or more light emitting diodes (LEDs), in accordance with some embodiments. In the views presented herein, it is assumed that light emerges from a front of the lens, such that the LED or LEDs can be positioned towards a rear of the lens. The terms "front," "rear," "top," "bottom, "side," are to be understood relative to one another with "front" and "rear" opposing each other, top and bottom opposing each other, and side between the top and bottom. Other directional terms are used merely for convenience in describing the lens and other elements and should not be construed as limiting in any way.
FIG. 1 illustrates, by way of example, a diagram of an embodiment of a backlight unit, not forming part of the claimed invention, comprising a planar light guide disposed over a protection plate, and a light emitting element disposed on a side of the light guide.
FIG. 2 illustrates, by way of example a diagram of an embodiment of another backlight unit, not forming part of the claimed invention, comprising a planar light guide disposed over the protection plate.
FIG. 3 illustrates, by way of example, a partial cross-section diagram of an embodiment of a display device, not forming part of the claimed invention, that includes a backlight
FIG. 4 illustrates a diagram of an embodiment of a display device, forming part of the claimed invention, that provides s polarized light to the screen.
FIG. 5 illustrates a diagram of another embodiment of a display device, forming part of the claimed invention, that provides s polarized light to the screen
FIG. 6 illustrates a perspective view diagram of a portion of the display device of FIG. 5 from the perspective indicated by arrows labelled "6" in FIG. 5.
FIG. 7 illustrates a diagram of an embodiment of a display device, forming part of the claimed invention, that provides p polarized light to the screen.
FIG. 8 illustrates a diagram of another embodiment of a display device, forming part of the claimed invention, that provides p polarized light to the screen
FIG. 9 shows a flow chart of an example of a method for forming a light-emitting apparatus, in accordance with some examples, not forming part of the claimed invention.
FIG. 10 illustrates, by way of example, a logical block diagram of an extended reality (XR) (e.g., augmented reality (AR)/virtual reality (VR)/mixed reality (MR) system, not forming part of the claimed invention.

Corresponding reference characters indicate corresponding parts throughout the several views. Elements in the drawings are not necessarily drawn to scale. The configurations shown in the drawings are merely examples and should not be construed as limiting the scope of the disclosed subject matter in any manner.

### DETAILED DESCRIPTION

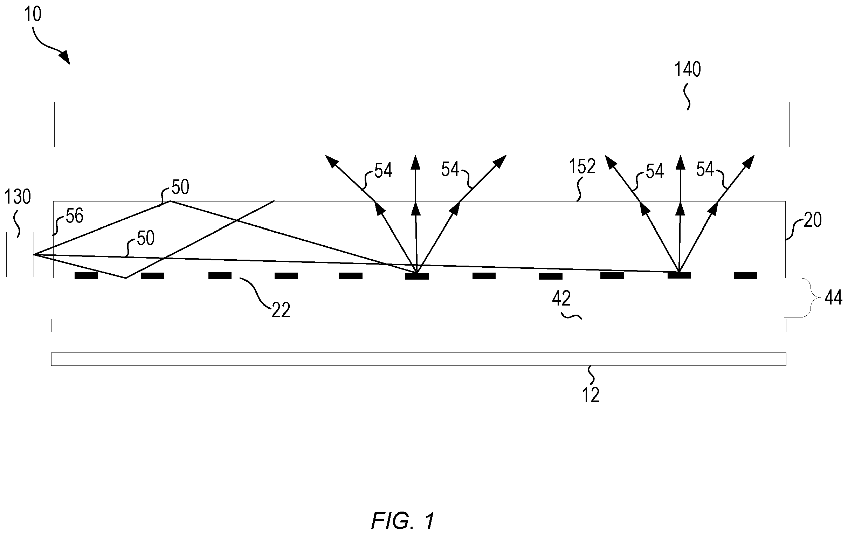

FIG. 1 illustrates, by way of example, a diagram of an embodiment of a backlight unit 10, not forming part of the claimed invention, comprising a planar light guide 20 disposed over a protection plate 12, and a light emitting element 130 disposed on a side of the light guide 20. Some light 50 entering the light guide 20 from the light emitting element 130 is reflected towards a top surface 152 of the light guide 20 by a patterned bottom surface 22 and another optional reflection sheet positioned between the light guide 20 and backplate 12 and exits from the light guide 20. Light 54 that exits provides backlight to a display 140 (e.g., a liquid crystal display (LCD)) on an opposite side of the light guide 20 as the reflection sheet 42. The reflection sheet 42 is separated from the bottom surface 22 by a an air gap 44. The reflection sheet 42 can include a polarization maintaining surface, such as a mirror. The reflection sheet 42 can include a scattering surface (e.g., a white painted surface). The pattern can be printed or molded on the surface 22, for example.

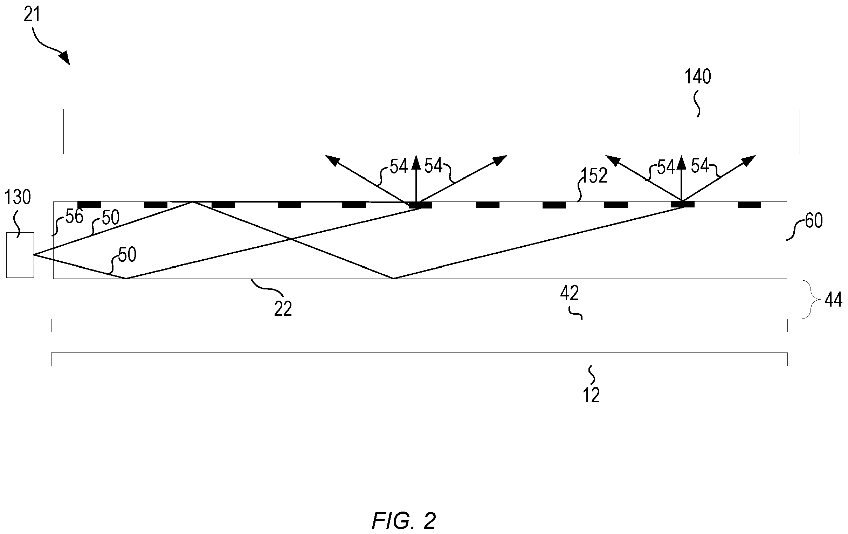

FIG. 2 illustrates, by way of example, a diagram of an embodiment of a backlight unit 21, not forming part of the claimed invention, comprising a planar light guide 60 disposed over a protection plate 12. The planar light guide 60 is similar to the light guide 20 of FIG. 1 with a patterned top surface 152 instead of a patterned bottom surface 22.

In some embodiments, the light emitting element 130 can be a rectangular single line array or multiple line array. In other embodiments, the light emitting element 130 can be formed or otherwise fabricated in a shape approximating a nonrectangular (e.g., circular or oval) shape. Light emitting elements, such as light emitting diodes (LEDs) can be of a single or multiple colors, or in some embodiments red, green, blue (RGB) arrays. Different color pixels can be interleaved, or in other embodiments, the different color pixels can have other groupings in which groups of one color are disposed together in one or both orthogonal directions. In other embodiments at least some of the sets of light emitting elements can provide different wavelengths of light for color tuning. For example, one set of light emitting elements can provide white light while the other set of light emitting elements may provide red light. The light emitting elements can be formed from a II-VI, III-V, or other compound semiconductor that may be a binary, ternary, quaternary, or other compound. For example, gallium nitride (GaN) is used for blue LEDs, gallium arsenide (GaAs) for infrared (IR) LEDs, and indium gallium phosphide (InGaP), indium gallium aluminum phosphide (InGaAlP), or indium gallium arsenic phosphide (InGaAsP) for visible LEDs, among others. Alternatively, a wavelength converting structure may be disposed in the path of light extracted from the LED. The wavelength converting structure includes one or more wavelength converting materials which may be, for example, conventional phosphors, organic phosphors, quantum dots, organic semiconductors, II-VI or III-V semiconductors, II-VI or III-V semiconductor quantum dots or nanocrystals, dyes, polymers, or other materials that luminesce. The wavelength converting material includes light scattering or light diffusing elements, such as titanium dioxide (TiO2), absorbs light emitted by the LED, and emits light of one or more different wavelengths. The light provided by the light source may be white, polychromatic, or monochromatic.

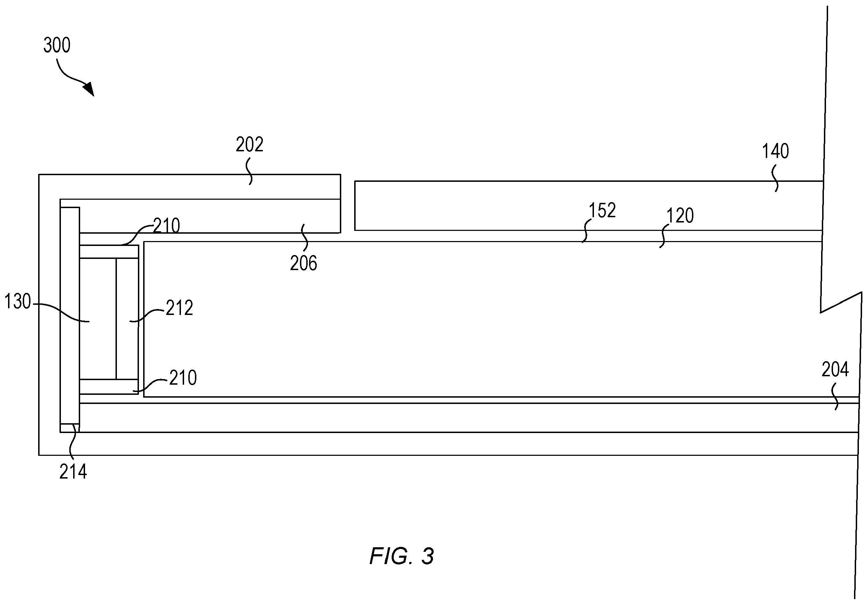

FIG. 3 illustrates, by way of example, a partial cross-section diagram of an embodiment of a display device 300, not forming part of the claimed invention, that includes a backlight. The display device 300 includes the display screen 140, the light guide 120, and the light emitting element 130. The display screen 140, can include an LCD screen in accordance with one embodiment. The LCD screen can be part of a television, a computer monitor, a smartphone screen, a watch screen, calculator screen, or other screen.

The light emitting element 130 can transmit light towards the light guide 120. The light emitting element 130 can include a light emitting diode (LED), a cold-cathode fluorescent lamp (CCFL), or the like. Theoretically, the light emitting element 130 can produce light with a Lambertian or near Lambertian distribution. The light emitting element 130 can include a top coating 212 and a side coating.

The display device 300 further includes a backplate 202, reflector sheets 204, 206, and a substrate 214. The backplate 202 provides protection from an external environment for the reflector sheets 204, 206, the light emitting element 130, the substrate 214, the light guide 120, and a surface of the display screen 140 facing the light guide 120. The backplate 202 can be made of metal, ceramic, polymer, or the like. An extent that the backplate 202 extends over the top surface 152 of the light guide 120 is sometimes called a bezel.

The reflector sheet 204, 206 is made of a light scattering and highly reflective material. The reflective material can reflect 90%, 95%, 99%, more or less light, or some value therebetween, of the light incident thereon. The reflector sheet 204, 206 can be patterned to help scatter the light or reflect the light to a specified location.

The top coating 212 can alter a color of the light from the light emitting element 130. For example, if the top coating 212 is phosphor, the light emitted from the light emitting element 130 can appear whiter to the human eye. This is because phosphor absorbs some of the blue light emitted from the light emitting element 130.

The side coating 210 can be made of a wide scattering, highly reflective material (e.g., above 80%, 85%, 90%, 95%, 99%, or some percentage therebetween of reflection at a wavelength of the light emitting element 130). The side coating 210 can help ensure that more light is transmitted through the top coating 212 or towards the light guide 120. Examples of side coating materials include filled silicon, acrylic, a white plastic, or other dielectric coating.

The substrate 214 can provide power and circuit routing for the light emitting element 130. The light emitting element 130 can be electrically and mechanically connected to electrical power through a trace or other electrical interconnect on or in the substrate 214. The substrate 214 can include a flex or rigid printed circuitry board (PCB). A flex PCB can be made of polyimide, polydimethylsiloxane, or the like. A rigid PCB can be made of FR-4, prepreg, or the like.

The light guide 120 is designed to spread the light from the light emitting element 130 as uniformly as possible across the display screen 140.The transmission of light on the display screen 140, depend on the polarization of incident light. The display screen transmission is maximum for a specific polarization. Further, newly emerging LGPs with diffractive patterns require polarized light for optimum performance. Example embodiments provide solutions to control polarization of the light incident on the display screen 140.

Polarization is defined relative to the plane of incidence. The plane of incidence is a plane that contains incoming rays and reflected rays, as well as, a normal to a sample surface. Perpendicular (s-) polarization is the polarization where the electric field is perpendicular to the plane of incidence, while parallel (p-) polarization is the polarization where the electric field is parallel to the plane of incidence.

Different polarizations of light can also be absorbed to different degrees by different materials. This is an important property for LCD screens. (e.g., the display screen 140) It is beneficial to have as little light absorbed by the material of the LCD screen as possible. This can be limited by polarizing the light incident on the light guide panel (e.g., light guide 120), and ultimately the LCD screen.

Incandescent, fluorescent, LED, and many other light sources are randomly polarized. An LCD screen has two (or more) layers of polarization material on top of each other. Normally, both layers are polarized in the same way, so that light passes through both layers. One (or both) of the layers can be made of liquid crystals. A polarization of a liquid crystal changes based on an applied voltage. When the voltage is applied, the polarization of the crystal can shift so that it is at 90 degrees difference from what it was before the voltage was applied. This creates an area that does not permit light therethrough. Different areas of liquid crystals can be controlled by voltages from control circuitry.

Liquid crystals are generally thin, rod-like molecules that move in response to an applied voltage. In a display, there are many liquid crystals and generally not all of them have exactly the same orientation with respect to another, but they are generally pointed in more or less the same direction. The liquid crystals turn and move in response to the voltage, such as to be in another orientation.

Based on the direction in which the liquid crystals point, compared to a polarization of incoming light and a thickness of the liquid crystals, the polarization of the incoming light either gets (a) rotated by 90 degrees while passing through the liquid crystals or (b) not rotated at all, in accordance with some embodiments. One can take advantage of this polarization rotation with the use of polarizers. Placing a polarizer on the output of the liquid crystal allows light to be let through only when the polarization of the light matches the polarization orientation of the polarizer. For example, turning the voltage on, rotates the liquid crystals one way and light gets through. Turning the voltage off stops light from getting through, or vice versa.

By placing the liquid crystals molecules into pixel format and putting color (e.g., red, green, blue, or combination thereof) filters over them, color can be provided. Some LCDs, like a basic digital watch, do not have a "backlight" and color filters, and therefore produce only a black and a greyish background. These watches rely on ambient light to pass through the liquid crystals. Many LCD displays, however, have backlights. Backlights help provide vibrant color incorporation (by allowing RGB filters to transmit a lot of light) and high brightness levels.

To increase the efficiency of the LCD backlight, polarized light can be beneficial. As previously discussed, the polarized light can have better reflection characteristics and can be absorbed less by a material in the LCD screen. For at least these reasons, it is desired to control the polarization of the light incident on the LGP and ultimately the LCD screen.

However, simply adding a polarizer between the LED and the LGP increases the bezel length of the display. Also, for thermal management, it is beneficial to mount the LEDs on a separate PCB from the polarizer.

Example embodiments include a new design for edge coupling and polarizing of the emission (e.g., Lambertian emission) from the light emitting element 130 to the light guide 120. Example embodiments can include a modified version of Polarizing Beam Splitter (PBS). The design of example embodiments is compact and can reduce the bezel length (as compared to other polarized solutions) by folding the LED coupling path. Also, example embodiments can simplify the thermal management of LEDs since they can be mounted on a larger circuit board. The circuit board can be oriented so that a major surface (a surface on which the light emitting element 130 is mounted) faces the screen 140. This orientation is about 90 degrees from a normal orientation of a light emitting element 130.

3D displays based on lightfield technology rely on diffraction from a Diffractive Optical Element (DOE) pattern on the top surface 152 of the light guide 120. In many 3D displays, the light is edge coupled from the edges of the light guide 120 and into the light guide 120. On top of the light guide 120, a liquid crystal panel (e.g., the screen 140) modifies the spatial distribution of the light by switching pixels on and off. The incident light on the liquid crystal panel and inside the light guide 120 can be polarized to maximize the power efficiency of the display and brightness of light emitted by the screen 140.

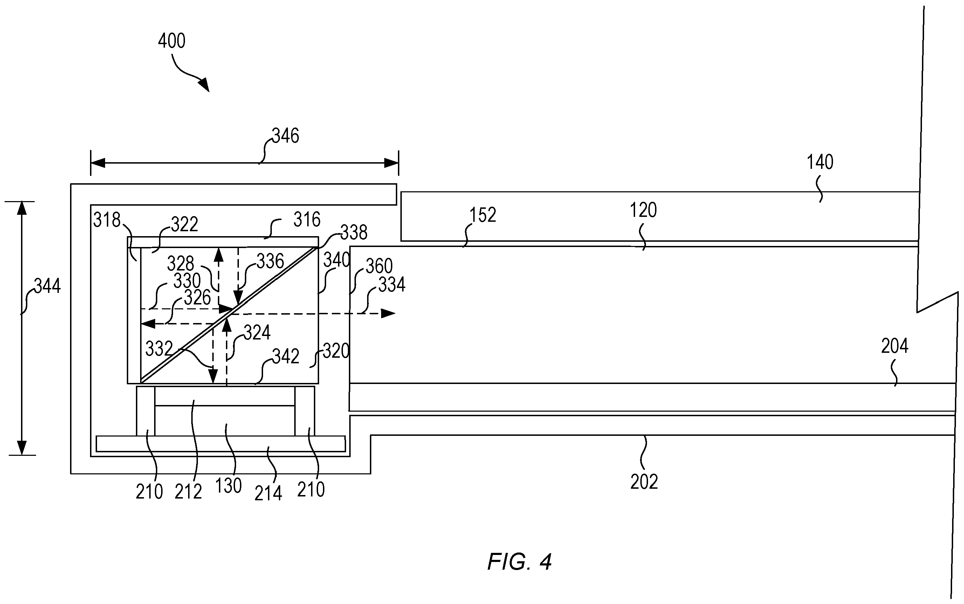

FIG. 4 illustrates a diagram of an embodiment of a display device 400, according to the claimed invention, that provides s polarized light to the screen 140. The display device 400 as illustrated includes the backplate 202, the reflector sheet 204, the substrate 214, the light emitting element 130, the side coating 210, the top coating 212, a polarizing device, and the display screen 140. The polarizing device includes prisms 320, 322, mirrors 316, 318, and a film 338.

The polarizing device polarizes unpolarized light 324 from the light emitting element 130. The light 324 is received through a receiving surface 342. The polarizing device emits polarized light 334 towards the light guide 120 through a transmission surface 340.

The light from the receiving surface 342 is incident on the prism 320. A prism (e.g., prism 320, 322) is a mostly transparent optical element (at specified wavelengths) that refracts light. The prism generally has a polyhedral shape. A prism with a triangular base has a shape known as a triangular prism. The triangular prism includes sides that share an edge with, and are connected by, a hypotenuse. The sides and the hypotenuse are generally planar, generally rectangular, and generally flat. The sides and hypotenuse are connected by two generally parallel faces called bases.

From an unpolarized light 324, s polarization is reflected by film 338 as polarized light 334 to the light guide 120. The remainder of the unpolarized light 324 is transmitted as ray 328 with polarization p. Mirror 316 reflects back light 326 as light 336 which is partially reflected as polarization s shown by ray 326 and mainly transmitted through the film 338 with polarization p shown by ray 332. Ray 332 scatters from layer 212 and loses its polarization and recycles as unpolarized light 324. Ray 326 is reflected back as 326 and experiences partial reflection as ray 328 and partial transmission as polarized light 334. The film 338 can be made of a polyester, epoxy, or urethane-based adhesive, a combination thereof, among others. The film 338 can include a multilayer structure. The film 338 can include a layer of adhesive and alternating layers of high and low refractive index materials for polarization modification. The film 338 can operate using Brewster's angle in each layer to separate orthogonal polarization components of light.

The light 326, 328 is reflected off the mirrors 318, 316, respectively as the light 330, 336. The light 330, 336 is again incident on the film 338 and a portion of the light 330, 336 that is polarized in the specified manner is transmitted as the light 334. Another portion of the light 330, 336 is guided to the top coating 212.

The light 332 is recycled to the top coating 212 and randomized. The recycled light with randomized polarization is again incident on the prism 320 and gains the appropriate polarization and emission through the transmission surface 340 as light 334 that is mostly polarized (over 50%, 75%, 80%, 90%, 95%, 99%, more, or some percentage therebetween).

The orientation of the substrate 214 and the light emitting element 130 relative to the light guide 120 are different than normal. FIG. 4 shows a typical orientation between the light emitting element 130 and the light guide 120 in accordance with an example embodiment. Typically, the light emitting element 130 transmits light directly towards an input surface 360 of the light guide 120. In the embodiment of FIG. 4, however, the light emitting element 130 emits light generally perpendicular to the input surface 360 and the polarizing device redirects the light 324 to the input surface 360. In other words, in FIG. 4, the light emitting element 102 is oriented to transmit the light 324 towards the display screen 140. The light 324 from the light emitting element 130 is polarized and redirected by the polarizing device to the light guide 120.

Not only does the embodiment in FIG. 4 provide polarized light, it also allows for improved thermal management of the light emitting element 130 and other components of the display device 300. The improved thermal management can be from increased space for heat dissipating components. The heat dissipating components can be on the substrate 214. A depth of the backplate 202 (indicated by arrow 344) is generally smaller than the width of the bezel (indicated by arrow 346) at a front of the display device 400. By allowing the substrate 214 to substantially span the width of the bezel (indicated by arrow 346), a larger heat dissipating component can be used, as compared to a size of a heat dissipating component that, at biggest, spans a thickness (e.g., the dimension indicated by the arrow 344) of the backplate 202. However, improved thermal management of the display device 400 may cause the system to be slightly thicker (e.g., the dimension corresponding to the arrow 344) than other polarizer solutions, such as that illustrated in FIG. 4.

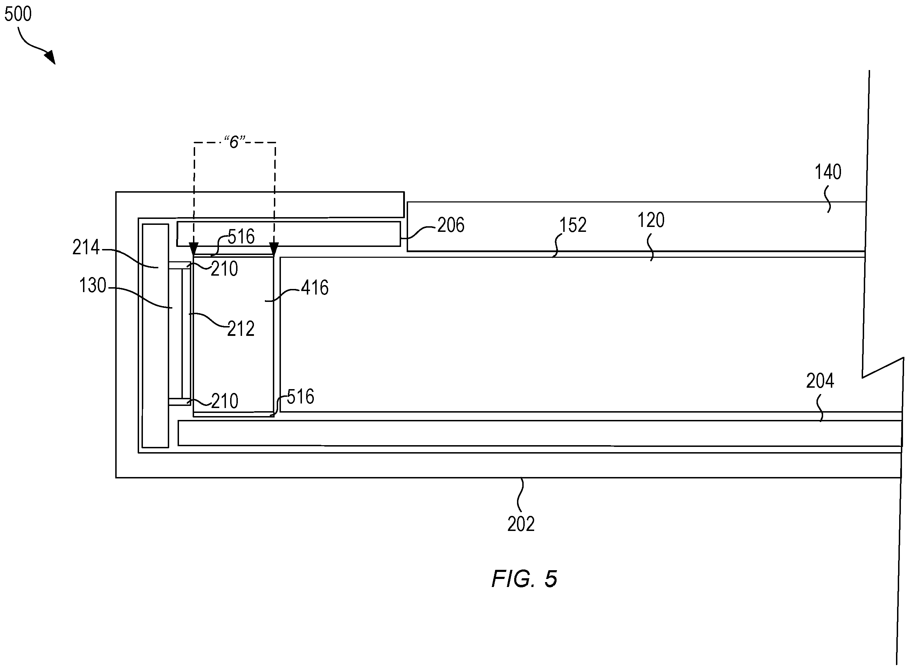

FIG. 5 illustrates a diagram of an embodiment of a display device 500, according to the claimed invention, with an improved backlight. The display device 500 is similar to the display device 400, with the display device 500 including a different polarizing device 416. The polarizing device 416 of the display device 500 is configured to polarize light with s polarization similar to display device 400. The polarizing device 416 will be discussed in more detail below.

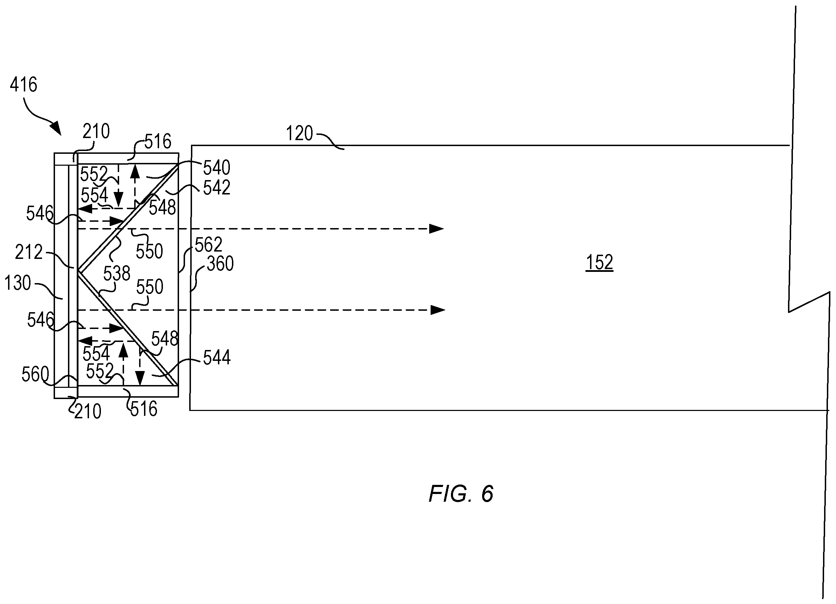

FIG. 6 illustrates a diagram of a portion of the display device 500 with a view of the polarizing device 416 indicated by arrow labelled "6" in FIG. 5. The polarizing device 416 as illustrated includes three prisms 540, 542, 544. The prism 540 is coupled at a first side to a hypotenuse of the prism 542. The prism 540 is coupled at a second side to a hypotenuse of the prism 544. A hypotenuse of the prism 540 faces the input surface 360 of the light guide 120.

The polarizing device 416 polarizes unpolarized light 546 from the light emitting element 130. The light 546 is received through a receiving surface 560 of the polarizing device 416. The polarizing device 416 emits polarized light 550 towards the light guide 120 through a transmission surface 562.

The light from the receiving surface 560 is incident on the prisms 540, 542, 544. The prisms 540, 542, 544 can include a birefringent crystalline material.

A portion of the light 550 that is polarized (either s or p polarization) is transmitted out the transmission surface 562. Another portion of the light 550 is incident on a film 538 and reflected to the prism 542, 544 as the light 548. The film 538 can be an adhesive that connects the prisms 540, 542, 544. The film 538 can be similar to the film 338.

The light 548 is reflected off the mirror 516 as the light 552. The light 552 is again incident on the film 538 and a portion of the light 552 that is polarized in the specified manner is transmitted as the light 550. Another portion of the light 554 is guided to the top coating 212.

The light 554 is recycled to the top coating 212 and randomized. The recycled light with randomized polarization is again incident on the prism 542, 544 and gains the appropriate polarization for emission out the transmission surface 562 as light 550 that is mostly polarized (over 50%, 75%, 80%, 90%, 95%, 99%, more, or some percentage therebetween).

The mirror 516 can surround the prisms 540, 542, 544, leaving the transmission surface 562 and the receiving surface 560 exposed. The mirror 516 can be similar to the mirror 316, 318. The display device 500 is a thinner device with a slightly increased bezel length as compared to the display device 400.

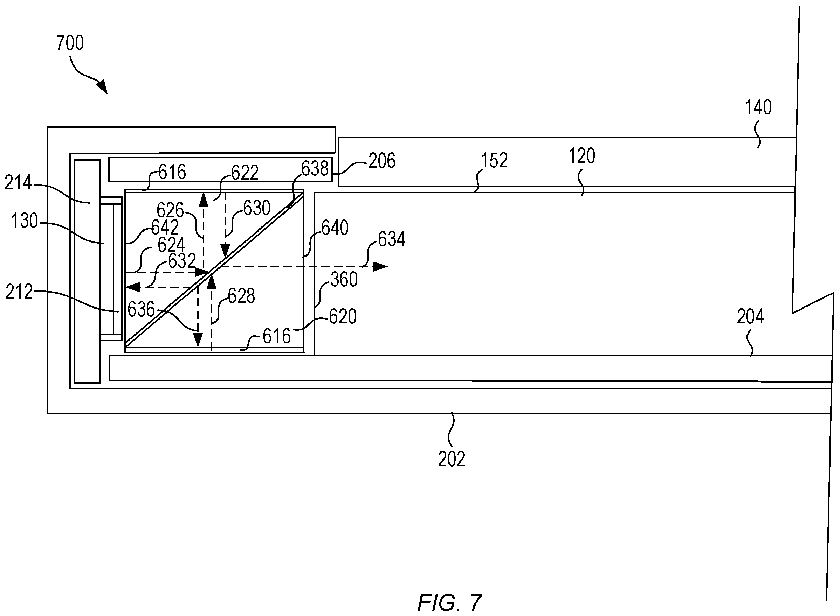

FIG. 7 illustrates a diagram of an embodiment of a display device 700, according to the claimed invention, that provides p polarized light to the screen 140. The display device 700 as illustrated includes the backplate 202, the reflector sheet 204, 206, the substrate 214, the light emitting element 130 (including the side coating 210 and the top coating 212 not labelled in FIG. 7), a polarizing device, and the display screen 140. The polarizing device includes prisms 620, 622, mirror 616 and a film 638.

The polarizing device polarizes unpolarized light 624 from the light emitting element 130. The light 624 is received through a receiving surface 642. The polarizing device emits p polarized light 634 towards the input surface 360 of the light guide 120 through a transmission surface 640.

The light from the receiving surface 642 is incident on the prism 622. The prism 620, 622 can be similar to other prisms discussed. From an unpolarized light 624, p polarized light is transmitted by film 638 as p polarized light 634 to the light guide 120. The film 638 can be similar to other films discussed. The remainder of the unpolarized light 624 is transmitted as light 626, 636 with mostly s polarization.

The light 626, 636 is reflected off the mirror 616 as the light 630, 628, respectively. The light 630, 628 is again incident on the film 638 and a portion of the light 630, 628 that is p polarized is transmitted as the light 334. Another portion of the light 630, 628 is guided to the top coating 212 as light 632.

The light 632 is recycled to the top coating 212 and randomized. The recycled light with randomized polarization is again incident on the prism 622 and gains the appropriate polarization and emission through the transmission surface 640 as light 634 that is mostly polarized (over 50%, 75%, 80%, 90%, 95%, 99%, more, or some percentage therebetween).

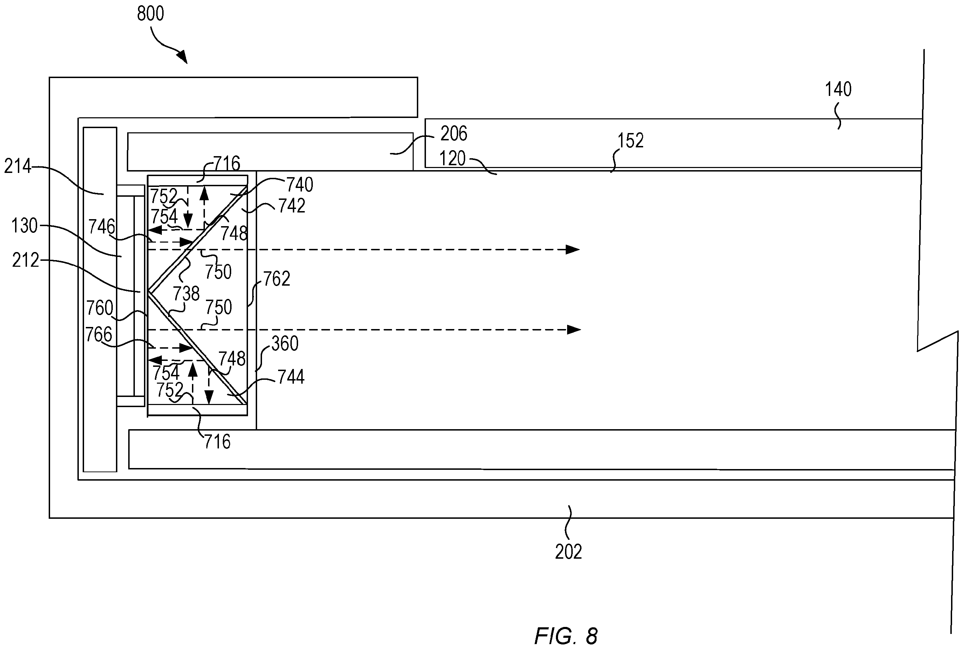

FIG. 8 illustrates a diagram of a portion of a display device 800, according to the claimed invention, that provides p polarized light to the screen 140. The polarizing device as illustrated includes three prisms 740, 742, 744. The prism 740 is coupled at a first side to a hypotenuse of the prism 742. The prism 740 is coupled at a second side to a hypotenuse of the prism 744. A hypotenuse of the prism 740 faces the input surface 360 of the light guide 120.

The polarizing device polarizes unpolarized light 746 from the light emitting element 130. The light 746 is received through a receiving surface 760 of the polarizing device. The polarizing device emits polarized light 750 towards an input surface 360 of the light guide 120 through a transmission surface 762.

The light from the receiving surface 760 is incident on the prisms 740, 742, 744. A portion of the light 750 that is polarized (p polarized) is transmitted out the transmission surface 762. Another portion of the light 750 is incident on a film 738 and reflected to the prism 742, 744 as the light 748. The film 738 can be an adhesive that connects the prisms 740, 742, 744. The film 538 can be similar to the film 338.

The light 748 is reflected off the mirror 716 as the light 752. The light 752 is again incident on the film 738 and a portion of the light 752 that is p polarized is transmitted as the light 750. Another portion of the light 754 is guided to the top coating 212.

The light 754 is recycled to the top coating 212 and its polarization is randomized by the top coating 212. The recycled light with randomized polarization is again incident on the prism 742, 744 and gains the appropriate polarization for emission out the transmission surface 762 as light 750 that is mostly p polarized (over 50%, 75%, 80%, 90%, 95%, 99%, more, or some percentage therebetween).

The mirror 716 can surround the prisms 740, 742, 744, leaving the transmission surface 762 and the receiving surface 760 exposed. The mirror 716 can be similar to the mirror 316, 318. The display device 700 is a thinner device with a slightly increased bezel length as compared to the display device 400.

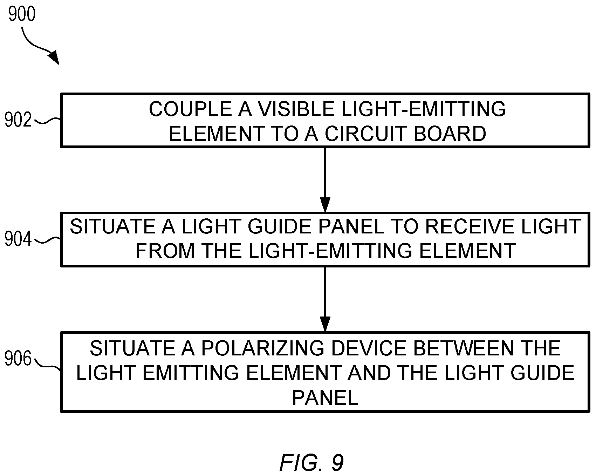

FIG. 9 shows a flow chart of an example of a method 900 for forming a light-emitting apparatus, in accordance with some examples, not forming part of the claimed invention. The method 900 can be used to form any of the example apparatuses of FIGS. 4-6, among other apparatuses. The method 900 is but one method for forming a light-emitting apparatus; other suitable methods can also be used.

The method 900 can include coupling a visible light-emitting element to a circuit board and in a bezel of a backplate, at operation 902, situating a light guide panel including an input surface and a transmission surface, the transmission surface generally perpendicular to the input surface, such that the input surface faces the light-emitting element, at operation 904; and situating a polarizing device, including a prism, to receive visible light from the light-emitting element, polarize the visible light, and transmit the polarized light to the input surface of the light guide panel, at operation 906.

The polarizing device can include two exposed surfaces, four non-exposed surfaces, and a reflecting component on the non-exposed surfaces. The method 900 can include, wherein the two exposed surfaces comprises a first surface facing the light emitting element, and a second surface facing the input surface of the light guide panel. The method 900 can include, wherein the first surface is generally perpendicular to the second surface and the polarized light is s-polarized. The method 900 can include, wherein the first surface is generally parallel to the second surface and the polarized light is p-polarized.

While the preceding discussion regards polarization in a backlight application, the same polarizing device can be used in other applications. For example, the polarizing device can be used in an outdoor lighting fixture, such as a streetlight. The polarized light can reduce reflection at (wet) planar surfaces, for example. In another example, the backlight can be used in an extended reality (XR) application (e.g., an augmented reality (AR), virtual reality (VR), or mixed reality (MR) application).

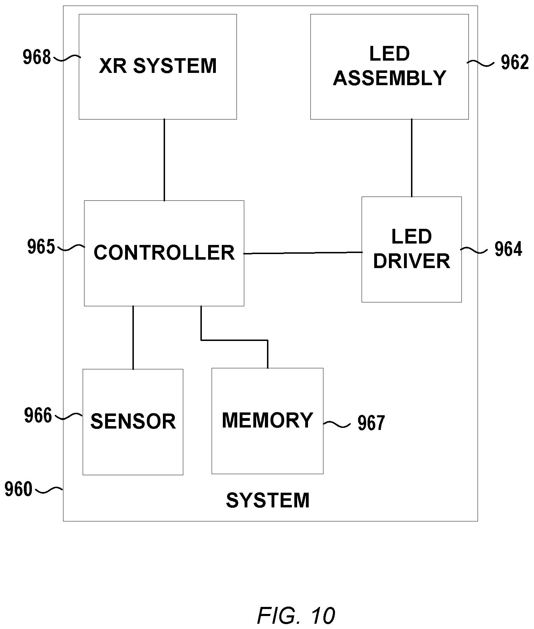

FIG. 10 shows a display system 960 in accordance with some embodiments, not forming part of the claimed invention. The system 960 includes an XR system 968, such as can be part of a communication or computing device (e.g., smart phone, tablet/laptop computer) or another device, such as a projector. The LED array 962 can be similar to the foregoing described embodiments and can include multiple sets of LEDs driven by an LED driver 964 that is controlled by a controller 965, such as a microprocessor. In some embodiments the controller 965 can be coupled to the XR system 968 and sensors 966 and operate in accordance with instructions and profiles stored in a memory 967. In some embodiments, the system 960 can include modules that allow wirelessly communicating via Bluetooth, WiFi, long term evolution (LTE), or any other communication protocol using transceiver circuitry.

The XR system 968 can incorporate a wide range of optics and optical reflective or transmissive surfaces. In some embodiments, optics can be used to correct or minimize two-or three dimensional optical errors including pincushion distortion, barrel distortion, longitudinal chromatic aberration, spherical aberration, chromatic aberration, field curvature, astigmatism, or any other type of optical error. In some embodiments, optical elements can be used to magnify and/or correct images. Optical elements can include apertures, filters, a Fresnel lens, a convex lens, a concave lens, or any other suitable optical element that affects the projected. Additionally, one or more of the optical elements can have one or more coatings, including ultraviolet (UV) blocking or anti-reflective coatings. In some embodiments, magnification of display images allows the XR system 968 to be physically smaller, of less weight, and require less power than larger displays. Additionally, magnification can increase a field of view of the displayed content allowing display presentation equals a user's normal field of view.

In one embodiment the LED driver 964 can be formed, for example, using either an analog-driver approach or a pulse-width modulation (PWM)- driver approach. When an analog driver is used, all LED sets that are driven together may be driven simultaneously. Each LED or LED set may be driven independently by providing a different current for each LED or LED set. In a PWM driver, each LED or LED set may be switched on, in sequence, at high speed and driven with substantially the same current. The color of the display may be controlled by changing the duty cycle of each color. In some embodiments, the current is supplied from a voltage-controlled current source.

The amount of current supplied and/or duty cycle may be controlled, as indicated above, by the controller 965. The controller 965 may be a microprocessor that includes, for example, an application processor and a baseband processor. Sensors 966 may include, for example, positional sensors (e.g., a gyroscope and/or accelerometer) and/or other sensors that may be used to determine the position, speed, and orientation of system 960. The signals from the sensors 966 may be supplied to the controller 965 to be used to determine the appropriate course of action of the controller 965 (e.g., which image should be presented to an XR user).

The memory 967 may be nonvolatile memory. The memory 967 may store instructions and applications used by the controller 965 to control driving of the LED array by the driver 964 based on particular profiles also stored therein. The instructions may take into account input from the various sensors 966 as well as images to be streamed, overlain, or otherwise supplied to the XR user.

The controller 965 may be any microprocessor capable of executing instructions (sequential or otherwise) that specify actions to be taken. The system 960 may contain logic and various components and modules on which the controller 965 may operate, as described above. Modules and components are tangible entities (e.g., hardware) capable of performing specified operations and may be configured or arranged in a certain manner. In an example embodiment, circuits may be arranged (e.g., internally or with respect to external entities such as other circuits) in a specified manner as a module. The controller 965 may be configured by firmware or software (e.g., instructions, an application portion, or an application) as a module that operates to perform specified operations. In an example embodiment, the software may reside on a machine readable medium, such as a non-statutory machine readable medium. In an example embodiment, the software, when executed by the underlying hardware of the module, causes the hardware to perform the specified operations.

Accordingly, the term "module" (and "component") is understood to encompass a tangible entity, be that an entity that is physically constructed, specifically configured (e.g., hardwired), or temporarily (e.g., transitorily) configured (e.g., programmed) to operate in a specified manner or to perform part or all of any operation described herein. Considering examples in which modules are temporarily configured, each of the modules need not be instantiated at any one moment in time. For example, where the modules comprise a general-purpose hardware processor configured using software, the general-purpose hardware processor may be configured as respective different modules at different times. Software may, accordingly, configure a hardware processor, for example, to constitute a particular module at one instance of time and to constitute a different module at a different instance of time.

In operation, in some embodiments, illumination from all of the pixels of the LED assembly 162 may be adjusted - deactivated or the intensity of illumination of the pixels may be reduced by a significant predetermined percent (e.g., between about 10% and about 90%). In various embodiments, the adjustment may occur for a predetermined amount of time or until manually overridden. Regardless of whether illumination from all, or merely some, of the pixels of the LED assembly 962 are adjusted, illumination from some or all of the other pixels (within the same LED array, if present, or in the separate LED array) may or may not also be adjusted. That is, some or all the other pixels, may be activated, if inactive when the pixels are active, the intensity of illumination of the other pixels may be increased by a significant predetermined percent (e.g., between about 10% and about 90%), or the intensity of illumination of the other pixels may be unaffected by adjustment of the pixels. In the latter case, the other pixels may thus provide light at the same time and in the same place as light from the pixels.

While embodiments of the present disclosed subject matter have been shown and described herein, it will be obvious to those skilled in the art that such embodiments are provided by way of example only. Numerous variations, changes, and substitutions will now occur to those skilled in the art, upon reading and understanding the material provided herein, without departing from the disclosed subject matter. It should be understood that various alternatives to the embodiments of the disclosed subject matter described herein may be employed in practicing the various embodiments of the subject matter. It is intended that the following claims define the scope of the disclosed subject matter.

## Claims

1. A display device (400; 500; 700; 800), comprising:
a light emitting element (130) comprising a top coating (212) and a side coating (210), configured to emit visible light (324; 546; 624; 746);
a polarizing device situated to receive unpolarized visible light (324; 546; 624; 746) emitted by the light emitting element (130) and to generate polarized light (334; 550; 634; 750), the polarizing device including a receiving surface (342; 560; 642; 760) and a transmission surface (340; 562; 640; 762), the receiving surface (342; 560; 642; 760) facing the light emitting element (130), wherein the polarizing device comprises:
- a plurality of prisms (320, 322; 540, 542, 544; 620, 622; 740, 742, 744),
- a mirror (316, 318; 516; 616; 716) arranged to surround the prisms (320, 322; 540, 542, 544; 620, 622; 740, 742, 744), leaving the transmission surface (340; 562; 640; 762) and the receiving surface (342; 560; 642; 760) exposed, and
- a film (338; 538; 638; 738) between prisms (320, 322; 540, 542, 544; 620, 622; 740, 742, 744); and
wherein a portion of the light (332; 554; 632; 754) reflected by the mirror (316, 318; 516; 616; 716) and transmitted by the film (338; 538; 638; 738) is recycled to the top coating (212) and randomized, and wherein the recycled light with randomized polarization is again incident on a prism (320, 322; 540, 542, 544; 620, 622; 740, 742, 744) of the polarizing device;
a light guide panel (120) configured to receive the polarized light (334; 550; 634; 750) at an input surface (360) facing the transmission surface (340; 562; 640; 762) of the polarizing device and to distribute the polarized light (334; 550; 634; 750) to a major surface (152) of the light guide panel (120) facing a display screen (140) of the display device (400; 500;700; 800).

2. The display device of claim 1, wherein the receiving surface (342) is perpendicular to the transmission surface (340).

3. The display device according to the preceding claim, wherein the polarized light (334) is s-polarized.

4. The display device of claim 1, wherein the receiving surface (560; 642; 760) is parallel to the transmission surface (562; 640; 762).

5. The display device according to the preceding claim, wherein the polarized light (550; 634; 750) is p-polarized.

6. The display device according to any of the preceding claims, wherein the plurality of prisms comprises a birefringent crystalline material.

7. The display device according to any of the preceding claims, wherein the film (338; 538; 638; 738) comprises any of: a polyester, an epoxy, a urethane-based adhesive.

8. The display device according to any of the preceding claims, wherein the film (338; 538; 638; 738) comprises a multilayer structure.

9. The display device according to the preceding claim, wherein the film (338; 538; 638; 738) comprises a layer of adhesive and alternating layers of high and low refractive index materials.

10. The display device according to the preceding claim, wherein the film (338; 538; 638; 738) is configured to apply Brewster's angle in each layer to separate orthogonal polarization components of light.

11. A display device according to any of the preceding claims, comprising a backplate (202), and wherein the light emitting element (130) is located within a bezel of the backplate (202).

## Patentansprüche

1. Eine Anzeigevorrichtung (400; 500; 700; 800), umfassend:
ein lichtemittierendes Element (130) mit einer oberen Beschichtung (212) und einer seitlichen Beschichtung (210), das so konfiguriert ist, dass es sichtbares Licht (324; 546; 624; 746) emittiert;
eine Polarisationsvorrichtung, die angeordnet ist, um unpolarisiertes sichtbares Licht (324; 546; 624; 746) zu empfangen, das von dem lichtemittierenden Element (130) emittiert wird, und um polarisiertes Licht (334; 550; 634; 750) zu erzeugen, wobei die Polarisationsvorrichtung eine Eintrittsfläche (342; 560; 642; 760) und eine Emittierfläche (340; 562; 640; 762) umfasst, wobei die Eintrittsfläche (342; 560; 642; 760) dem lichtemittierenden Element (130) zugewandt ist, wobei die Polarisationsvorrichtung umfasst:
- eine Vielzahl von Prismen (320, 322; 540, 542, 544; 620, 622; 740, 742, 744),
- einen Spiegel (316, 318; 516; 616; 716), der so angeordnet ist, dass er die Prismen (320, 322; 540, 542, 544; 620, 622; 740, 742, 744) umgibt, wobei die Emittierfläche (340; 562; 640; 762) und die Eintrittsfläche (342; 560; 642; 760) frei bleiben, und
- eine Folie (338; 538; 638; 738) zwischen Prismen (320, 322; 540, 542, 544; 620, 622; 740, 742, 744); und
wobei ein Teil des von dem Spiegel (316, 318; 516; 616; 716) reflektierten und von der Folie (338; 538; 638; 738) durchgelassenen Lichts (332; 554; 632; 754) zu der oberen Beschichtung (212) zurückgeführt und randomisiert wird, und wobei das zurückgeführte Licht mit randomisierter Polarisation erneut auf ein Prisma (320, 322; 540, 542, 544; 620, 622; 740, 742, 744) der Polarisationsvorrichtung fällt;
eine Lichtleitertafel (120), die so konfiguriert ist, dass sie das polarisierte Licht (334; 550; 634; 750) an einer Eingangsfläche (360) empfängt, die der Emittierfläche (340; 562; 640; 762) der Polarisationsvorrichtung zugewandt ist, und das polarisierte Licht (334; 550; 634; 750) auf eine Hauptfläche (152) der Lichtleitertafel (120) verteilt, die einem Anzeigeschirm (140) der Anzeigevorrichtung (400; 500; 700; 800) zugewandt ist.

2. Anzeigevorrichtung nach Anspruch 1, wobei die Eintrittsfläche (342) senkrecht zur Emittierfläche (340) steht.

3. Anzeigevorrichtung nach dem vorhergehenden Anspruch, wobei das polarisierte Licht (334) s-polarisiert ist.

4. Anzeigevorrichtung nach Anspruch 1, wobei die Eintrittsfläche (560; 642; 760) parallel zu der Emittierfläche (562; 640; 762) ist.

5. Anzeigevorrichtung nach dem vorhergehenden Anspruch, wobei das polarisierte Licht (550; 634; 750) p-polarisiert ist.

6. Anzeigevorrichtung nach einem der vorangehenden Ansprüche, wobei die Vielzahl von Prismen ein doppelbrechendes kristallines Material umfasst.

7. Anzeigevorrichtung nach einem der vorhergehenden Ansprüche, wobei die Folie (338; 538; 638; 738) einen der folgenden Stoffe umfasst: einen Polyester, ein Epoxid, einen Klebstoff auf Urethanbasis.

8. Anzeigevorrichtung nach einem der vorhergehenden Ansprüche, wobei die Folie (338; 538; 638; 738) eine Mehrschichtstruktur aufweist.

9. Anzeigevorrichtung nach dem vorhergehenden Anspruch, wobei die Folie (338; 538; 638; 738) eine Klebstoffschicht und abwechselnde Schichten aus Materialien mit hohem und niedrigem Brechungsindex umfasst.

10. Anzeigevorrichtung nach dem vorhergehenden Anspruch, wobei die Folie (338; 538; 638; 738) so konfiguriert ist, dass er in jeder Schicht den Brewster-Winkel anwendet, um orthogonale Polarisationskomponenten des Lichts zu trennen.

11. Anzeigevorrichtung nach einem der vorhergehenden Ansprüche, die eine Rückplatte (202) umfasst, und bei der das lichtemittierende Element (130) innerhalb einer Einfassung der Rückplatte (202) angeordnet ist.

## Revendications

1. Un dispositif d'affichage (400; 500; 700; 800), comprenant :
un élément émetteur de lumière (130) comprenant un revêtement supérieur (212) et un revêtement latéral (210), configuré pour émettre de la lumière visible (324; 546; 624; 746);
un dispositif de polarisation situé pour recevoir la lumière visible non polarisée (324; 546; 624; 746) émise par l'élément émetteur de lumière (130) et pour générer de la lumière polarisée (334; 550; 634; 750), le dispositif de polarisation comprenant une surface de réception (342; 560; 642; 760) et une surface de transmission (340; 562; 640; 762), la surface de réception (342; 560; 642; 760) faisant face à l'élément émetteur de lumière (130), dans lequel le dispositif de polarisation comprend :
- une pluralité de prismes (320, 322; 540, 542, 544; 620, 622; 740, 742, 744),
- un miroir (316, 318; 516; 616; 716) disposé de manière à entourer les prismes (320, 322; 540, 542, 544; 620, 622; 740, 742, 744), en laissant exposées la surface de transmission (340 ; 562 ; 640 ; 762) et la surface de réception (342; 560; 642; 760), et
- un film (338; 538; 638; 738) entre des prismes (320, 322; 540, 542, 544; 620, 622; 740, 742, 744); et
dans lequel une partie de la lumière (332; 554; 632; 754) réfléchie par le miroir (316, 318; 516; 616; 716) et transmise par le film (338; 538; 638; 738) est recyclée dans le revêtement supérieur (212) et randomisée, et dans lequel la lumière recyclée avec une polarisation randomisée est à nouveau incidente sur un prisme (320, 322; 540, 542, 544; 620, 622; 740, 742, 744) du dispositif de polarisation ;
un panneau de guidage de la lumière (120) configuré pour recevoir la lumière polarisée (334; 550; 634; 750) sur une surface d'entrée (360) faisant face à la surface de transmission (340; 562; 640; 762) du dispositif de polarisation et pour distribuer la lumière polarisée (334; 550; 634; 750) sur une surface principale (152) du panneau de guidage de la lumière (120) faisant face à un écran d'affichage (140) du dispositif d'affichage (400; 500; 700; 800).

2. Le dispositif d'affichage de la revendication 1, dans lequel la surface de réception (342) est perpendiculaire à la surface de transmission (340).

3. Le dispositif d'affichage selon la revendication précédente, dans lequel la lumière polarisée (334) est polarisée en S.

4. Le dispositif d'affichage de la revendication 1, dans lequel la surface de réception (560; 642; 760) est parallèle à la surface de transmission (562; 640; 762).

5. Le dispositif d'affichage selon la revendication précédente, dans lequel la lumière polarisée (550; 634; 750) est polarisée p.

6. Le dispositif d'affichage selon l'une des revendications précédentes, dans lequel la pluralité de prismes comprend un matériau cristallin biréfringent.

7. Dispositif d'affichage selon l'une des revendications précédentes, dans lequel le film (338; 538; 638; 738) comprend l'un des éléments suivants: un polyester, un époxyde, un adhésif à base d'uréthane.

8. Dispositif d'affichage selon l'une des revendications précédentes, dans lequel le film (338; 538; 638; 738) comprend une structure multicouche.

9. Dispositif d'affichage selon la revendication précédente, dans lequel le film (338; 538; 638; 738) comprend une couche d'adhésif et des couches alternées de matériaux à indice de réfraction élevé et faible.

10. Le dispositif d'affichage selon la revendication précédente, dans lequel le film (338; 538; 638; 738) est configuré pour appliquer l'angle de Brewster dans chaque couche afin de séparer les composantes de polarisation orthogonales de la lumière.

11. Dispositif d'affichage selon l'une des revendications précédentes, comprenant une plaque arrière (202), et dans lequel l'élément émetteur de lumière (130) est situé dans une lunette de la plaque arrière (202).
